(19) Europäisches Patentamt

European Patent Office

Office européen des brevets

(11) **EP 1 483 621 B1**

(12) **EUROPÄISCHE PATENTSCHRIFT**

(45) Veröffentlichungstag und Bekanntmachung des Hinweises auf die Patenterteilung:
**15.06.2005 Patentblatt 2005/24**

(21) Anmeldenummer: 03720178.7

(22) Anmeldetag: **11.03.2003**

(51) Int Cl.⁷: **G03B 9/10**, G03B 9/12

(86) Internationale Anmeldenummer:
**PCT/DE2003/000833**

(87) Internationale Veröffentlichungsnummer:
**WO 2003/077024 (18.09.2003 Gazette 2003/38)**

(54) **VERFAHREN UND VORRICHTUNG ZUR ERFASSUNG DES BLENDENÖFFNUNGSWINKELS EINER VERSTELLBAREN UMLAUFBLENDE IN EINER LAUFBILDKAMERA**

METHOD AND DEVICE FOR DETECTING THE OPENING ANGLE OF THE SHUTTER OF AN ADJUSTABLE ROTATING SHUTTER IN A FILM CAMERA

PROCEDE ET DISPOSITIF PERMETTANT DE DETECTER L'ANGLE D'OUVERTURE D'UN OBTURATEUR ROTATIF REGLABLE DANS UNE CAMERA

(84) Benannte Vertragsstaaten:
**DE GB**

(30) Priorität: **12.03.2002 DE 10212563**

(43) Veröffentlichungstag der Anmeldung:
**08.12.2004 Patentblatt 2004/50**

(73) Patentinhaber: **ARNOLD & RICHTER CINE TECHNIK GMBH & CO. BETRIEBS KG 80799 München (DE)**

(72) Erfinder: **HAUBMANN, Michael A-1120 Wien (AT)**

(74) Vertreter: **Ninnemann, Detlef, Dipl.-Ing. et al Maikowski & Ninnemann, Postfach 15 09 20 10671 Berlin (DE)**

(56) Entgegenhaltungen:
**DE-A- 2 947 333          DE-A- 3 902 688**

**Beschreibung**

Die Erfindung betrifft ein Verfahren und eine Vorrichtung zur Erfassung des Blendenöffnungswinkels einer in einer Laufbildkamera angeordneten verstellbaren Umlaufblende gemäß dem Oberbegriff der Ansprüche 1 und 13.

Aus der DE 39 02 688 C2 ist eine verstellbare Umlaufblende für eine Filmkamera bekannt, die aus einem Blendenflügel und einem koaxial zum Blendenflügel verstellbaren Blendenverstellflügel besteht, der über ein Getriebe mit einem mit der Blendenwelle gekoppelten Blendenverstellflügelmotor verbunden ist. Zwischen dem Blendenverstellflügel und der Blendenwelle bzw. Blende ist ein mit der Blendenwelle verbundenes Potentiometer angeordnet, dessen Schleifkontakt mit dem Blendenverstellflügel verbunden ist und somit ein der Stellung des Blendenverstellflügels gegenüber der Blendenwelle bzw. Blende entsprechendes Signal abgibt. Weiterhin weist die Blendenwelle Schleifringkontakte zur Stromzufuhr für den Blendenverstellflügelmotor und zur Abgabe des am Potentiometer erfassten Istwertes der Stellung des Blendenverstellflügels gegenüber der Blende auf.

Eine zusätzlich im Bereich der verstellbaren Umlaufblende angeordnete Lichtschranke misst den Hellsektor der verstellbaren Umlaufblende während der Rotation der verstellbaren Umlaufblende und ermöglicht einen zusätzlichen Soll- bzw.- Istwert-Vergleich zur Feinkorrektur und verbesserten Genauigkeit der Blendenverstellung unabhängig von Systemtoleranzen.

Zur Steuerung und Regelung des Hellsektors der verstellbaren Umlaufblende ist eine Steuer- und Regeleinrichtung vorgesehen, die eingangsseitig mit den mit dem Potentiometer verbundenen Schleifringkontakten und einem Sollwertgeber für die Größe des Hellsektors und ausgangsseitig über einen Verstärker mit zwei mit dem Blendenverstellflügelmotor für den Blendenverstellflügel verbundenen Schleifringkontakten verbunden ist.

Die bekannte Vorrichtung zur Erfassung, Steuerung und Regelung des Hellsektors einer verstellbaren Umlaufblende ermöglicht eine Einstellung des Blendenverstellsektors sowohl im Lauf als auch im Ruhezustand der verstellbaren Umlaufblende, eine manuelle Einstellung des Blendenverstellsektors sowie eine Erfassung des eingestellten Wertes im Stillstand der verstellbaren Umlaufblende. Die bekannte Vorrichtung verlangt allerdings wegen der mit der verstellbaren Umlaufblende mitrotierenden Bauteile ein hohes Maß an Herstellungsgenauigkeit sowie die Verwendung teurer Bauteile, um Störungen im Betrieb der Laufbildkamera zu vermeiden.

Aufgabe der vorliegenden Erfindung ist es, den Blendenöffnungswinkel bzw. Hell- oder Dunkelsektor einer verstellbaren Umlaufblende mit einfachen Mitteln und geringem Herstellungsaufwand mit großer Genauigkeit und hoher Funktionssicherheit zu erfassen.

Diese Aufgabe wird erfindungsgemäß durch ein Verfahren mit den Merkmalen des Anspruchs 1 und eine Vorrichtung mit den Merkmalen des Anspruchs 13 gelöst.

Die erfindungsgemäße Lösung ermöglicht und gewährleistet eine Erfassung des Blendenöffnungswinkels bzw. Hell- oder Dunkelsektors einer verstellbaren Umlaufblende mit großer Genauigkeit und Funktionssicherheit, d.h. bei minimaler Störanfälligkeit, mit geringem Herstellungs- und Bauteileaufwand.

Das erfindungsgemäße Verfahren geht von der Erkenntnis aus, dass die Erfassung des Blendenöffnungswinkels, d.h. des Hellsektors (oder alternativ des Dunkelsektors) einer verstellbaren Umlaufblende durch die Erfassung der Position des Blendenflügels und des Blendenverstellflügels und einer daraus abgeleiteten Abweichung zwischen beiden Positionswerten eine berührungslose Erfassung der Blenden- und Blendenverstellflügelposition und daraus des Blendenöffnungswinkel bzw. des Hell- oder Dunkelsektors der verstellbaren Umlaufblende möglich ist. Aus diesem Grunde kann auf eine aufwendige Messung des Blendenöffnungswinkels oder Hellsektors mittels eines mitrotierenden Potentiometers verzichtet werden, dessen Messsignale über Schleifringkontakte zur Ableitung einer Stellgröße aus dem erfassten Istwert und einem eingegebenen Sollwert an eine Steuer- und Regeleinrichtung abgegeben werden.

Die Positionsabweichung zwischen dem Blendenflügel und dem Blendenverstellflügel wird insbesondere aus der Differenz der durch Abtastung der Positionen des Blendenflügels und des Blendenverstellflügels, insbesondere durch eine vom Blendenflügel und vom Blendenverstellflügel getrennte Abtastung der Positionen ermittelt.

Diese Ausgestaltung des erfindungsgemäßen Verfahrens mit sowohl voneinander getrennter Positionserfassung des Blendenflügels und des Blendenverstellflügels als auch mit vom Blendenflügel und vom Blendenverstellflügel getrenntem Sensor gewährleistet eine hohe Auflösung der Positionserfassung, da diese nicht von Markierungspunkten des Blendenflügels und des Blendenverstellflügels abhängt, und ermöglicht die Verwendung unterschiedlicher Sensoren, die je nach Genauigkeitsanforderungen und Aufwand ausgewählt werden können.

Da nach dem erfindungsgemäßen Verfahren der Blendenöffnungswinkel aus der Differenz der Positionen des Blendenflügels und des Blendenverstellflügels bestimmt wird, kann die Erfassung der Position des Blenden- und des Blendenverstellflügels sowohl über absolut als auch inkremental messende Systeme erfolgen. Als weitere Alternative kann eine inkrementale Positionserfassung mit einer Referenzmarkenerfassung kombiniert werden, so dass zumindest nach einer Umdrehung der rotierenden Umlaufblende eine absolute Positionsbestimmung des Blendenflügels und des Blendenverstellflügels möglich ist.

In einer ersten Variante des erfindungsgemäßen Verfahrens wird die absolute Position des Blendenflügels und die absolute Position des Blendenverstellflügels mit einer Auflösung von n Schritten während einer Umdrehung der Umlaufblende erfasst und der Blendenöffnungswinkel ($\alpha$) der Umlaufblende aus der Beziehung

$$\alpha = P_{BF} - P_{VF} * 360° / n$$

mit

P$_{BF}$ der Position des Blendenflügels und

P$_{VF}$ der Position des Blendenverstellflügels

bestimmt, wobei bei einem Winkel $\alpha$, der kleiner als 0° ist, der Wert solange um 360° erhöht wird, bis er größer oder gleich 0° ist oder bei einem Winkel $\alpha$, der größer oder gleich 360° ist, der Wert solange um 360° reduziert wird, bis er kleiner als 360° ist.

Die absolute Positionsbestimmung des Blendenflügels und des Blendenverstellflügels liefert einen eindeutigen Positionswert mit einer Auflösung von n Schritten pro Umdrehung der rotierenden Umlaufblende und damit auch im Einschaltzustand der rotierenden Umlaufblende einen Positionsbezug zur Absolutlage zwischen dem Blenden- und dem Blendenverstellflügel und damit einen Wert für den Blendenöffnungswinkel.

Die absolute Positionsbestimmung der Blende und des Blendenverstellflügels kann sowohl aus codierten Sensorspuren als auch über ein Sinus- und Kosinus-Signal pro Umdrehung der Umlaufblende erfolgen, wobei bei einer Erfassung eines Sinus- und Kosinus-Signals der Blendenöffnungswinkel der Umlaufblende über eine Arcus-Tangens-Berechnung aus dem Sinus- und Kosinus-Signal bestimmt wird.

Bei einer Verwendung von inkremental messenden Sensoren liefern die dem Blendenflügel und dem Blendenverstellflügel zugeordneten Sensoren eine periodische Impulsfolge mit einer Auflösung von n Schritten. Da die Problematik der Verwendung inkremental messender Sensoren darin besteht, dass im Einschaltzustand kein Positionsbezug zur Absolutlage des Blendenflügels und des Blendenverstellflügels vorliegt, wird eine inkrementale Erfassung der Position des Blendenflügels und des Blendenverstellflügels mit der Erfassung mindestens eines Index- oder Referenzmarkensignals pro Umdrehung kombiniert.

Bei diesem Verfahren zur Erfassung des Blendenöffnungswinkels aus den Positionen des Blendenflügels und des Blendenverstellflügels wird innerhalb der ersten motorischen Umdrehung des Gesamtsystems der Stand eines die Inkrementalsignale zählenden Positionszählers beim Auftreten der Referenzmarken zwischengespeichert, wobei die Referenzmarken entweder bereits mechanisch aufeinander justiert sind oder aber über einen in einem nicht flüchtigen Kalibrationsspeicher abgelegten Korrekturwert miteinander verknüpft werden. Daraus errechnet sich der Blendenöffnungswinkel $\alpha$ der rotierenden Umlaufblende aus der Beziehung

$$\alpha = (Z_{BF} - Z_{VF} + K) * 360/n$$

mit

Z$_{BF}$ dem Zählerstand des Blendenflügels,

Z$_{VF}$ dem Zählerstand des Blendenverstellflügels und

O einem konstanten Offset.

Da die Indexpositionen und der Kalibrierwert Konstanten sind, lässt sich ein konstanter Offset aus der Beziehung

$$O = I_{BF} + I_{VF} + K$$

mit

I$_{BF}$ der Indexposition des Blendenflügels,
I$_{VF}$ der Indexposition des Blendenverstellflügels und
K dem Kalibrierwert

bestimmen, wobei bei einem Winkel $\alpha$, der kleiner als 0° ist, der Wert solange um 360° erhöht wird, bis er größer oder gleich 0° ist oder bei einem Winkel $\alpha$, der größer oder gleich 360° ist, der Wert solange um 360° reduziert wird, bis er kleiner als 360° ist. Der Kalibrierwert K ist ein Korrekturwert, der sich aus der Beziehung der mit den Umdrehungen des Blendenflügels und den Umdrehungen des Blendenverstellflügels gekoppelten Referenzmarken ergibt.

In einer speziellen Ausführungsform kann die absolute Position des Blendenflügels und des Blendenverstellflügels aus abstandscodierten Referenzmarken ermittelt werden.

Da bei Anordnung einer oder mehrerer Referenzmarken in einer Referenzmarkenspur parallel zu einer Inkrementalspur zur Herstellung eines absoluten Bezuges eine Referenzmarke angefahren werden muss, was im ungünstigsten Fall das Überfahren großer Teile des Erfassungsbereichs erfordert, bietet die Anordnung abstandscodierter Referenzmarken, bei denen neben der Inkrementalspur eine Referenzmarkenspur vorgesehen ist, auf der Referenzmarken mit definiert unterschiedlichem Abstand aufgebracht sind, den Vorteil, dass die absolute Position des Blendenflügels und des Blendenverstellflügels bereits nach dem Überfahren von zwei benachbarten Referenzmarken verfügbar ist.

Die Erfassung der Position des Blendenflügels und des Blendenverstellflügels zur Bestimmung des Blendenöffnungswinkels der rotierenden Umlaufblende dient vorzugsweise der Einstellung und Regelung des Blendenöffnungswinkels, indem der aus der Differenz der Position des Blendenflügels und des Blendenverstellflügels ermittelte Hell- oder Dunkelsektor als Istwert einer Blendenverstellflügel-Positionsregeleinrichtung zugeführt wird, an die ein über eine Schnittstelle zur Kamerasteuerung eingegebener Sollwert des Hell- oder Dunkelsektors abgegeben wird und die aus der Differenz des Soll- und Istwertes des Hell- oder Dunkelsektors eine Stellgröße für den Blendenverstellflügelmotor bildet.

Damit kann eine von der Auflösung der Positionserfassung und der weiterverarbeiteten Istwert-Signale sowie von der Genauigkeit der Sollwert-Vorgabe abhängige hochpräzise Einstellung des Blendenöffnungswinkels vorgenommen und in Verbindung mit einer geschlossenen Regelschleife bei unterschiedlichen Filmgeschwindigkeiten geregelt werden.

Dabei übernimmt die Steuerlogik die Initialisierung der Positionsmessung und dient zusätzlich zur Herstellung eines Absolutbezuges über beispielsweise eine Index- oder Referenzmarkenspur sowie zur Sicherheitsüberwachung bei Anwendung eines ausschließlich inkrementalen Positionserfassungssystems.

Eine weitere Variante der erfindungsgemäßen Lösung ist dadurch gekennzeichnet, dass die Positionen der Blende und des Blendenverstellflügels vor der Differenzbildung zur Bestimmung des Blendenöffnungswinkels interpoliert werden.

Über eine Sicherheitsüberwachung, die in vielen Anwendungsfällen bereits in Laufbildkameras integriert ist, kann der Blendenöffnungswinkel mit der Steuerlogik zusätzlich überwacht werden.

Weiterhin kann die mechanische Verriegelung des Blendenverstellflügels einmal pro Umdrehung der rotierenden Umlaufblende mit vorgegebener Frequenz abgetastet und bei aktivierter mechanischer Verriegelung des Blendenverstellflügels eine Ansteuerung des Blendenverstellflügelmotors blockiert werden, so dass eine den Blendenverstellflügelmotor gefährdende Ansteuerung bei mechanisch verriegeltem Blendenverstellflügel verhindert wird.

Die Positionssignale, die die Position der Blende und des Blendenverstellflügels angeben, der Absolutwert des Hell- oder Dunkelsektors der verstellbaren Umlaufblende und die die mechanische Verriegelung oder Entriegelung des Blendenverstellflügels abtastenden Signale werden vorzugsweise in einer Steuerlogik bearbeitet, die insbesondere auch die Positionserfassungen initialisiert.

Die Stellgröße für den Blendenverstellflügelmotor kann sowohl über Schleifringe als auch berührungslos von der Blendenverstellflügel-Positionsregeleinrichtung zum Blendenverstellflügelmotor übertragen werden.

Eine Vorrichtung zur Erfassung des Blendenöffnungswinkels bzw. Hell- oder Dunkelsektors einer in einer Laufbildkamera angeordneten verstellbaren Umlaufblende, die aus einem über eine Blendenwelle von einem Blendenmotor angetriebenen, kreissegment- oder kreissektorförmigen Blendenflügel und einem koaxial zum Blendenflügel angeordneten und gegenüber diesem mittels eines Blendenverstellflügelmotors verstellbaren Blendenverstellflügel besteht, weist einen mit dem Blendenflügel gekoppelten Sensor zur Abtastung der Blendenposition und Abgabe von Blendenflügel-Positionssignalen, einen mit dem Blendenverstellflügel gekoppelten Sensor zur Abtastung der Position des Blendenverstellflügels und Abgabe von Blendenverstellflügel-Positionssignalen und einen mit den Blendenflügel-Positionssignalen und den Blendenverstellflügel-Positionssignalen beaufschlagten Positionszähler zur Bildung der Differenz der Blendenflügel-Positionssignale und der Blendenverstellflügel-Positionssignale auf.

Die erfindungsgemäße Vorrichtung ermöglicht eine Erfassung des Blendenöffnungswinkels bzw. Hell- oder Dunkelsektors einer verstellbaren Umlaufblende mit beliebig großer Genauigkeit und Funktionssicherheit sowie minimaler Störanfälligkeit bei gleichzeitig geringem Aufwand für die zur Erfassung des Blendenöffnungswinkels erforderlichen, insbesondere standardisierten Bauteile.

Die Sensoren können aus absoluten Winkelmessgeräten mit mehreren auf einer Teilscheibe angeordneten Codespuren und den Codespuren zugeordneten Abtasteinrichtungen, insbesondere aus Absolutencodern, Resolvern oder Polradsensoren, bzw. aus inkrementalen Winkelmessgeräten mit einer auf einer Teilscheibe angeordneten periodischen Inkrementalspur und einer Referenzmarkenspur, die mindestens eine die absolute Position der Teilscheibe festlegende und dieser einen Messschritt zuordnende Referenzmarke aufweist, und der Inkremental- und Referenzmarkenspur zugeordneten Abtasteinrichtungen bestehen.

In einer Ausgestaltung kann die Referenzmarkenspur abstandscodierte Referenzmarken aufweisen, auf der Referenzmarken mit definiert unterschiedlichem Abstand aufgebracht sind.

Die Sensoren können Teilscheiben mit zusätzlichen Sinus- und Kosinusspuren aufweisen, wobei die Abtasteinrichtung die erfassten Sinus- und Kosinussignale an eine nachgeschaltete Berechnungseinheit abgibt, die aus den Sinus- und Kosinussignalen Arcus-Tangens-Werte berechnet.

Die Sensoren können als absolute oder inkrementale Winkelmessgeräte mit fotoelektrischer, magneto-resistiver oder permanentmagnetischer Abtastung ausgebildet sein.

Zur Erfassung, Einstellung und/oder Regelung des Blendenöffnungswinkels (Hell- oder Dunkelsektors) der in einer Laufbildkamera angeordneten verstellbaren Umlaufblende ist eine mit der Differenz der Blendenflügel-Positionssignale und der Blendenverstellflügel-Positionssignale beaufschlagte und mit einer Schnittstelle für die Steuerung der Laufbildkamera verbundene Steuerlogik und eine Blendenverstellflügel-Positionsregeleinrichtung vorgesehen, die eingangsseitig mit der Differenz der Blendenflügel-Positionssignale und der Blendenverstellflügel-Positionssignale sowie mit einem von der Steuerung der Laufbildkamera über eine Schnittstelle abgegebenen Sollwert für den Blendenverstellflügel oder für den Hell- oder Dunkelsektor der verstellbaren Umlaufblende beaufschlagt ist und ausgangsseitig eine Stellgröße für den Blendenverstellflügelmotor abgibt.

Weiterhin kann im Rotationsbereich der verstellbaren Umlaufblende eine Sicherheits-Abtasteinrichtung zur Erfassung des Hell- oder Dunkelsektors der verstellbaren Umlaufblendeangeordnet werden, deren Ausgang zur Abgabe von Absolutwerten des Hell- oder Dunkelsektors der verstellbaren Umlaufblende mit der Steuerlogik verbunden ist.

Zusätzlich kann die Steuerlogik eingangsseitig mit einer Abtasteinrichtung zur Erfassung der mechanischen Verriegelung des Blendenverstellflügels verbunden werden, die ein Ansteuern des Blendenverstellflügelmotors bei mechanisch verriegeltem Blendenverstellflügel blockiert.

Die Blendenverstellflügel-Positionsregeleinrichtung ist über eine Einrichtung zur Ansteuerung des Blendenverstellflügelmotors mit einer Energie-Übertragungseinrichtung zur Speisung des Blendenverstellflügelmotors und über eine Signalübertragungseinrichtung mit einem Motorverstärker zur Ansteuerung des Blendenverstellflügelmotors verbunden, wobei sowohl die Energie-Übertragungseinrichtung als auch die Stellgrößen-Übertragungseinrichtung berührungslos arbeiten kann.

Eine berührungslose Energie-Übertragungseinrichtung kann aus einem mit Hochfrequenz betriebenen, geteilten Transformator bestehen, dessen Primärwicklung mit einem primärseitigen Gleichspannungswandler und dessen Sekundärwicklung mit einem sekundärseitigen Gleichspannungswandler verbunden ist.

Zur bidirektionalen Kommunikation zwischen der rotierenden Baugruppe und der Kameraelektronik ist ein Prozessor in der rotierenden Baugruppe vorgesehen, der mit einem ersten Ausgang mit einem Steuereingang des mit der Energie-Übertragungseinrichtung verbundenen Motorverstärkers und mit einem ersten Eingang mit dem Ausgang eines Istwert-Messverstärkers verbunden ist, der an einen mit dem Blendenverstellflügelmotor gekoppelten Potentiometergeber) angeschlossen ist. Jeweils ein zweiter Eingang und Ausgang des Prozessors ist mit einer berührungslosen bidirektionalen Signal-Übertragungseinrichtung verbunden, die entweder aus einem optischen Sender und optischen Empfänger, aus einer induktiven Signalübertragungseinrichtung oder aus einer trägerfrequenten Signalübertragungseinrichtung besteht, bei der die Stellgröße mit einer Trägerfrequenz auf die Energieversorgung des Blendenverstellflügelmotors aufmoduliert ist.

Alternativ zur berührungslosen Energie- und Signalübertragung kann die Blendenverstellflügel-Positionsregeleinrichtung über eine Motorendstufe und eine Drehdurchführung oder einen Schleifring den Blendenverstellflügelmotor ansteuern.

Anhand von in der Zeichnung dargestellten Ausführungsbeispielen soll der der Erfindung zugrundeliegende Gedanke näher erläutert werden. Es zeigen:

Fig. 1 eine schematische Darstellung einer Vorrichtung zum Erfassen, Einstellen und Regeln des Blendenöffnungswinkels einer verstellbaren Umlaufblende;

Fig. 2 einen Schnitt durch eine schematische Darstellung eines opto-elektronischen Sensors;

Fig. 3 eine schematische Darstellung eines opto-elektronischen Sensors mit einer Teilscheibe mit Inkremental- und Referenzmarkenspur;

Fig. 4 einen Ausschnitt aus einer Teilscheibe zur absoluten Positionsbestimmung mit einer Inkrementalspur und mehreren Codespuren;

Fig. 5 einen Ausschnitt aus einer Teilscheibe mit einer Inkrementalspur und zueinander versetzte Sinus- und Kosinus-Spuren und

Fig. 6 eine schematische Darstellung einer Einrichtung zur berührungslosen Ansteuerung und Energieübertragung für einen Blendenverstellflügelmotor.

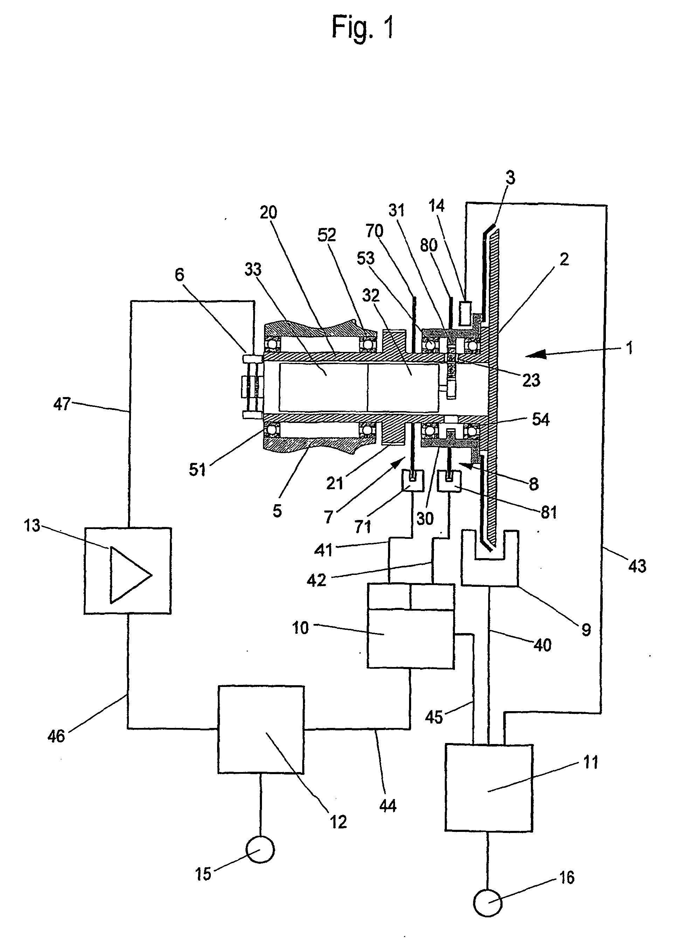

In Figur 1 ist schematisch eine verstellbare Umlaufblende 1 dargestellt, die aus einen kreissektor- oder kreissegmentförmigen Blendenflügel 2 und einem koaxial zum Blendenflügel 2 angeordneten und ebenfalls kreissektor- oder kreissegmentförmigen ausgebildeten, radial gegenüber dem Blendenflügel 2 verstellbaren Blendenverstellflügel 3 besteht. Durch eine radiale Verstellung des Blendenverstellflügels 3 gegenüber dem Blendenflügel 2 kann der Blendenöffnungswinkel zwischen den beiden Flügeln 2, 3 variiert werden, d.h. der die Aufnahmestrahlen vom Aufnahmeobjektiv zum Laufbildfilm freigebende Hellsektor vergrößert bzw. verkleinert und dementsprechend der durch den Blendenflügel 2 und den Blendenverstellflügel 3 gebildete Dunkelsektor umgekehrt vergrößert bzw. verkleinert werden. Die üblicherweise verspiegelte Oberfläche des Blendenflügels 2 und des Blendenverstellflügels 3 bewirkt damit beim Abdecken des Laufbildfilms eine Umlenkung der Aufnahmestrahlen über eine Abbildungsoptik zur Sucherlupe bzw. über Strahlteiler zu einer Videoausspiegelung oder dergleichen.

Der Blendenflügel 2 ist mit einer Blendenwelle 20 verbunden, die über Kugellager 51, 52 gegenüber einem Kameragehäuse bzw. Kameraskelett 5 abgestützt ist. Der Antrieb der Blendenwelle 20 erfolgt über ein Antriebsritzel 21, das mit einem Blendenmotor oder über ein Getriebe mit dem Kameramotor verbunden ist.

Der Blendenverstellflügel 3 ist mit einer Blendenverstellflügelwelle 30 verbunden, die über Kugellager 53, 54 gegenüber der Blendenwelle 20 abgestützt ist. Die Blendenverstellflügelwelle 30 ist über ein durch eine Öffnung 23 in der Blendenwelle 20 geführtes Planetengetriebe 31 mit einem Blendenverstellflügelgetriebe 32 verbunden, das von einem Blendenverstellflügelmotor 33 angetrieben wird, wobei der Blendenverstellflügelmotor 33 und das Blendenverstellflügelgetriebe 32 im Innern der Blendenwelle 20 angeordnet sind.

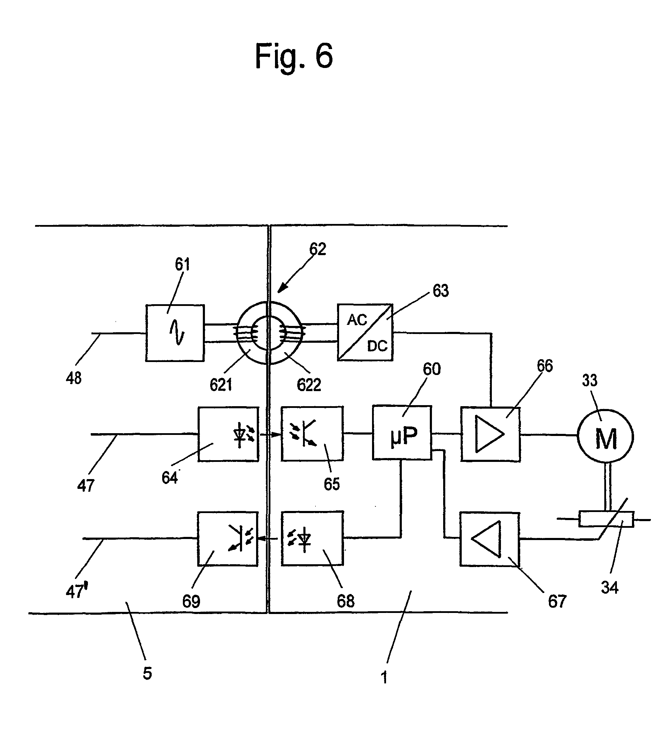

Die Speisung des Blendenverstellflügelmotors 33 erfolgt über eine rotierende oder berührungsfreie Energie-Übertragungseinrichtung 6, beispielsweise über eine Schleifringanordnung oder eine in Figur 6 dargestellte berührungslose Energie- und Stellgrößenübertragung.

Zur Erfassung der Absolutpositionen des Blendenflügels 2 und des Blendenverstellflügels 3 bzw. zur Erfassung der relativen Position des Blendenverstellflügels 3 gegenüber dem Blendenflügel 2 und damit zur Bestimmung des Blendenöffnungswinkels, d.h. Hell- und Dunkelsektors der verstellbaren Umlaufblende 1, sind Sensoren 7, 8 vorgesehen.

Der Sensor 7 zur Erfassung der Position des Blendenflügels 2 umfasst eine mit der Blendenwelle 20 verbundene erste Teilscheibe 70 sowie eine die erste Teilscheibe 70 abtastende Abtasteinrichtung 71.

Der die Position des Blendenverstellflügels 3 erfassende Sensor 8 umfasst eine zweite Teilscheibe 80, die mit der Blendenverstellflügelwelle 30 gekoppelt ist, sowie eine zweite Abtasteinrichtung 81, die die erste Teilscheibe 80 abtastet.

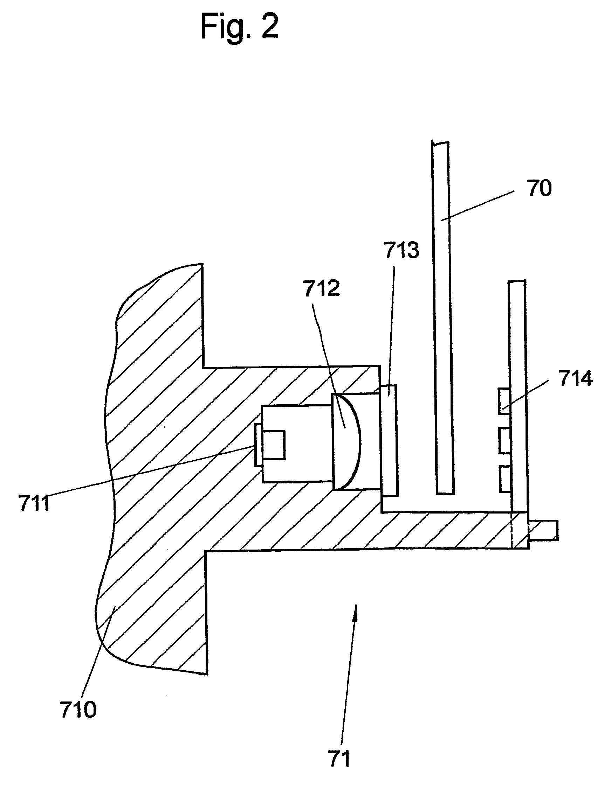

Beide Teilscheiben 70, 80 weisen eine oder mehrere nebeneinander angeordnete, radial umlaufende Spuren auf, die mittels der Abtasteinrichtungen 71, 81 abgetastet werden. Die Abtasteinrichtungen 71, 81 geben Blenden- und Blendenverstellflügel-Positionssignale an eine digitale Positionszähl- und Differenzbildungseinrichtung 10 ab, die aus der Differenz der Blendenflügel-Positionssignale und der Blendenverstellflügel-Positionssignale einen Wert für den Blendenöffnungswinkel bzw. Hell- oder Dunkelsektor der Umlaufblende 1 bildet. Verschiedene Möglichkeiten der Strukturierung der Teilscheiben 70, 80 sowie eine opto-elektronische Ausgestaltung der Abtasteinrichtungen 71, 81 sind in den Fig. 2 bis 5 dargestellt und werden nachstehend näher erläutert.

Die digitale Positionszähl- und Differenzbildungseinrichtung 10 gibt an Ihren Ausgängen Positions-Istwerte bzw. Werte des Blendenöffnungswinkels bzw. des Hell- oder Dunkelsektors der Umlaufblende sowohl an eine Blendenverstellflügel-Positionsregeleinrichtung 12 als auch an eine Steuerlogik 11 ab. Die Steuerlogik 11 ist zusätzlich mit einer Schnittstelle 16 zur Steuerung der Laufbildkamera verbunden. Über eine weitere Verbindungsleitung 40 ist die Steuerlogik 11 mit einer Sicherheitsabtasteinrichtung 9 verbunden, die beispielsweise aus einer Lichtschranke oder einem Hallelement besteht und ein zusätzliches Signal für den Blendenöffnungswinkel, Hell- oder Dunkelsektor der verstellbaren Umlaufblende 1 an die Steuerlogik 11 abgibt.

Über eine weitere Leitung 43 ist die Steuerlogik 11 mit einer die mechanische Verriegelung des Blendenverstellflügels 3 mit dem Blendenflügel 2 erfassenden Abtasteinrichtung 14 verbunden, die im Falle einer Verriegelung ein Blockiersignal an die Steuerlogik 11 abgibt und damit bei mechanisch verriegeltem Blendenverstellflügel 3 eine Ansteuerung des Blendenverstellflügelmotors 33 verhindert. Die Abtasteinrichtung 14 ermöglicht eine differenziertere Fehlererkennung, die eine Fehlbedienung, beispielsweise eine mechanische Verriegelung von einer Störung, beispielsweise einem verklemmten Getriebe unterscheidet, so dass Blendenverstellflügelmotor 33 bei aktiver mechanischer Verriegelung nicht angesteuert wird, um Beschädigungen der sensitiven Mechanik zu verhindern.

Der Blendenverstellflügel-Positionsregler 12 ist zusätzlich zu dem von der digitalen Positionszähl- und Differenzbildungseinrichtung 10 abgegebenen Positions-Istwert mit einem über eine Schnittstelle 15 zur Kamerasteuerung abgegebenen Sollwert für die Blendenverstellflügelposition beaufschlagt und gibt an seinem Ausgang ein Stellgrößensignal über eine Leitung 46 an einen Verstärker 13 zur Ansteuerung des Blendenverstellflügelmotors 33 ab. Zu diesem Zweck ist der Verstärker 13 über eine Verbindungsleitung 47 mit dem statischen Teil einer Übertragungseinrichtung 6 verbunden, deren rotierender Teil mit dem Blendenverstellflügelmotor 33 verbunden ist.

Die Übertragungseinrichtung 6 kann beispielsweise aus einer Schleifringanordnung bestehen, bei der die auf einer Motorwelle angeordneten Schleifringe von Bürsten kontaktiert werden, die mit der Verbindungsleitung 47 verbunden sind.

Eine alternative Übertragungseinrichtung 6 ist in Figur 6 dargestellt und zeigt eine berührungslose Energie- und bidirektionale Signalübertragungseinrichtung.

Die Sensoren 7, 8 zur Erfassung der Position des Blendenflügels 2 und des Blendenverstellflügels 3 können nach einem opto-elektronischen, magneto-resistiven, induktiven, kapazitiven oder dauermagnetischen Abtastprinzip arbeiten. Ein opto-elektronischer Sensor ist in Figur 2 in einem Längsschnitt dargestellt.

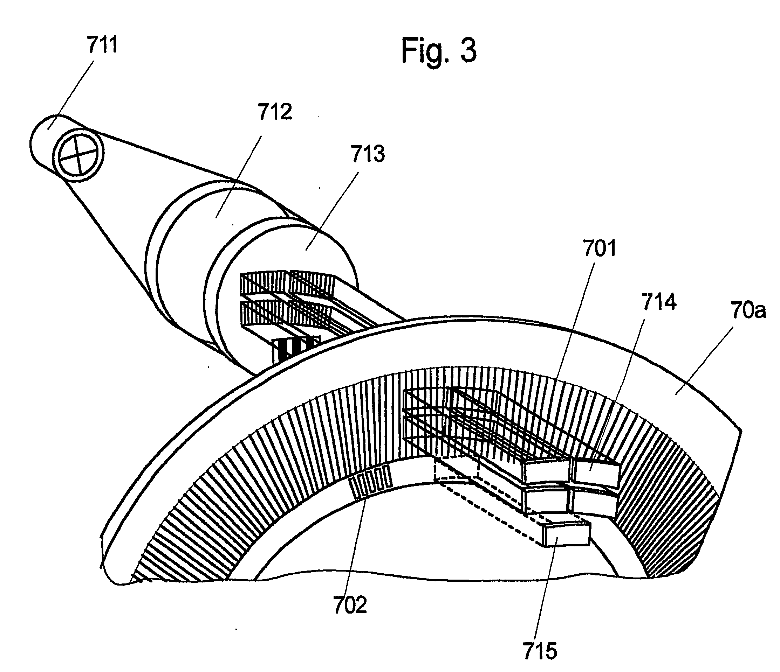

Allen Abtastprinzipien gemeinsam ist eine mit der Blendenwelle 20 bzw. der Blendenverstellflügelwelle 30 gekoppelte Teilscheibe 70, 80, die in inkrementaler oder codierter Form Abtastspuren enthält, die mittels der Abtasteinrichtungen 71, 81 abgetastet werden. In den Figuren 3 bis 5 sind verschiedene Möglichkeiten der Ausgestaltung von Teilscheiben mit inkrementalen und codierten bzw. sinus- und kosinusförmigen Abtastspuren dargestellt und werden ebenfalls nachstehend näher erläutert.

Der in Figur 2 dargestellte Teilschnitt durch einen opto-elektronischen Sensor zeigt beispielsweise die mit der Blendenwelle 20 gekoppelte Teilscheibe 70 zur Erfassung der Position des Blendenflügels 2 sowie eine Abtasteinrichtung 71 zur Abtastung der Teilscheibe 70. Der prinzipielle Aufbau des in Figur 2 dargestellten opto-elektronischen Sensors entspricht dem üblicher opto-elektronischer Winkelmessgeräte mit einer fotoelektrisch abgetasteten Teilung mit bis zu 18.000 oder 36.000 radialen Strichen auf einer beispielsweise als Glasscheibe ausgebildeten Teilscheibe 70. Da der opto-elektronische Sensor im Innem des Kameragehäuses angeordnet ist, das ohnehin gegenüber Staub und Flüssigkeiten geschützt ist, bedarf es keines zusätzlichen Gehäuses, wenn der Film gegenüber Fremdlicht geschützt geführt wird, so dass das Sensorgehäuse 710 Teil des Kameragehäuses sein kann.

Die Abtasteinrichtung 71 besteht aus einer Halbleiter-Lichtquelle 711, einer Kondensorlinse 712 und einer Abtastplatte 713, die auf der einen Seite der Teilscheibe 70 angeordnet sind, während auf der anderen Seite der Teilscheibe 70 Fotodioden 714 so angeordnet sind, dass die von der Halbleiter-Lichtquelle 711 ausgehenden Strahlen mittels der Kondensorlinse 712 in parallele Lichtstrahlen umgesetzt und durch die in der Abtastplatte 713 vorgesehenen Teilungen und die auf der Teilscheibe 70 angeordnete Inkremental- und Codesignalspuren auf die Fotodioden 714 gelangen. Die Fotodioden 714 sind in nicht näher dargestellter Weise über eine Folgeelektronik mit Analog/Digitalwandler und gegebenenfalls einer Multiplexeinrichtung und diese mit der digitalen Positionszähl- und Differenzbildungseinrichtung 10 gemäß Fig. 1 verbunden.

Figur 3 zeigt eine perspektivische Ansicht eines Sensors mit fotoelektrischer Abtastung nach einem abbildenden Messprinzip und einer Teilscheibe mit einer Inkrementalspur und einer Referenzmarkenspur.

Der Sensor enthält eine vorzugsweise aus einer lichtemittierenden Diode bestehende Lichtquelle 711, eine Kondensorlinse 712 zur Erzeugung paralleler Lichtstrahlen, die auf eine Abtastplatte 713 fallen, die sowohl ein Strichgitter für die Inkrementalspur 701 der Teilscheibe 70a als auch ein Strichgitter für die Referenzmarkenspur 702 der Teilscheibe 70a aufweist. Der im Durchlichtverfahren arbeitende Sensor gemäß Figur 3 weist auf der anderen Seite der Teilscheibe 70a Fotoelemente 714, 715 auf, die auf die Inkrementalspur 701 und die Referenzmarkenspur 702 ausgerichtet sind.

Da das Strichgitter der Inkrementalspur 701 und der Referenzmarkenspur 702 relativ zu dem Gegengitter gleicher Struktur der Abtastplatte 713 bewegt wird, kommen die Strichgitter der inkrementalspur 701 und der Referenzmarkenspur 702 der Teilscheibe 70a abwechselnd mit denen der Abtastplatte zur Deckung, woraus Hell/Dunkel-Modulationen erzeugt werden, die von den Fotoelementen 714, 715 detektiert werden.

Bei dem in Figur 3 dargestellten Sensor ist eine Referenzmarke 702 auf der Teilscheibe 70a angeordnet, d.h. zur Herstellung eines absoluten Bezuges muss die Referenzmarke 702 angefahren werden, was im ungünstigsten Fall eine ganze Umdrehung der Teilscheibe 70a und damit des Blendenflügels 2 bzw. des Blendenverstellflügels 3 erfordert. Um das Anfahren einer Referenzmarke zu beschleunigen, kann anstelle einer einzelnen Referenzmarke 702 eine abstandscodierte Referenzmarkenspur vorgesehen werden, bei der sich neben der Inkrementalspur 701 eine Spur befindet, auf der Referenzmarken mit definiert unterschiedlichem Abstand aufgebracht sind. Dadurch ist die absolute Position des Blendenflügels 2 gemäß Figur 1 bzw. des Blendenverstellflügels 3 gemäß Figur 1 bereits nach dem Überfahren von zwei benachbarten Referenzmarken verfügbar.

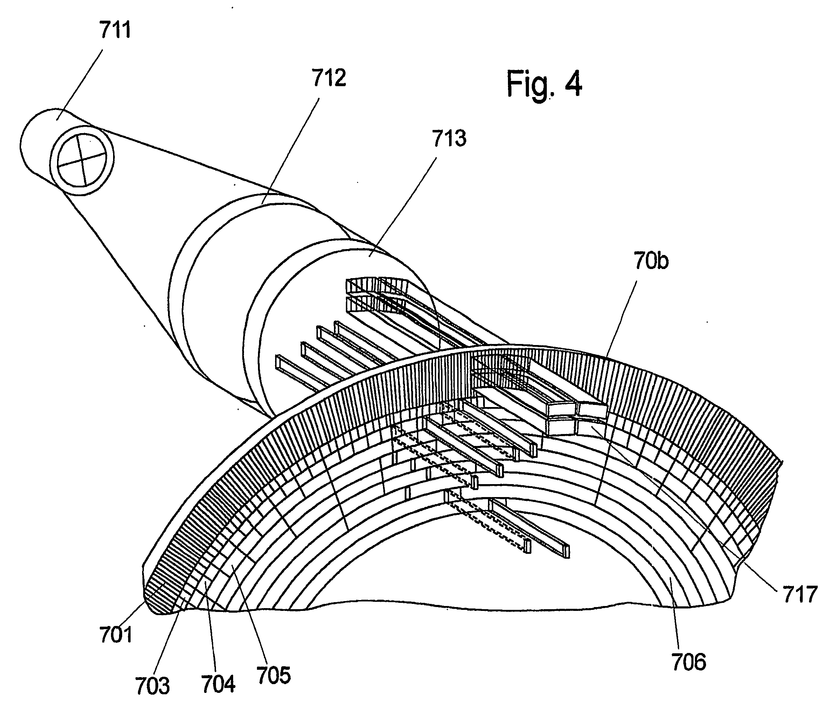

Eine Alternative zu einem Sensor mit Inkrementalspur und Referenzmarkenspur stellt ein Absolutwert-Sensor dar, der in Form eines Sensors mit fotoelektrischer Abtastung in Figur 4 schematisch-perspektivisch dargestellt ist.

Der in Figur 4 dargestellte Sensor weist analog zu dem in Figur 3 dargestellten Sensor eine Lichtquelle 711, eine Kondensorlinse 712 und eine Abtastplatte 713 auf. Die Teilscheibe 70b weist im Unterschied zur Teilscheibe 70a des in Figur 3 dargestellten Sensors neben einer Inkrementalspur 701 mehrere radial nebeneinander angeordnete Codespuren 703 bis 706 auf, die mittels den einzelnen Spuren zugeordneter Fotoelemente 717 abgetastet werden. Die Codierung der Codespuren 703 bis 706 kann in beliebiger Weise, beispielsweise im Gray-Code erfolgen.

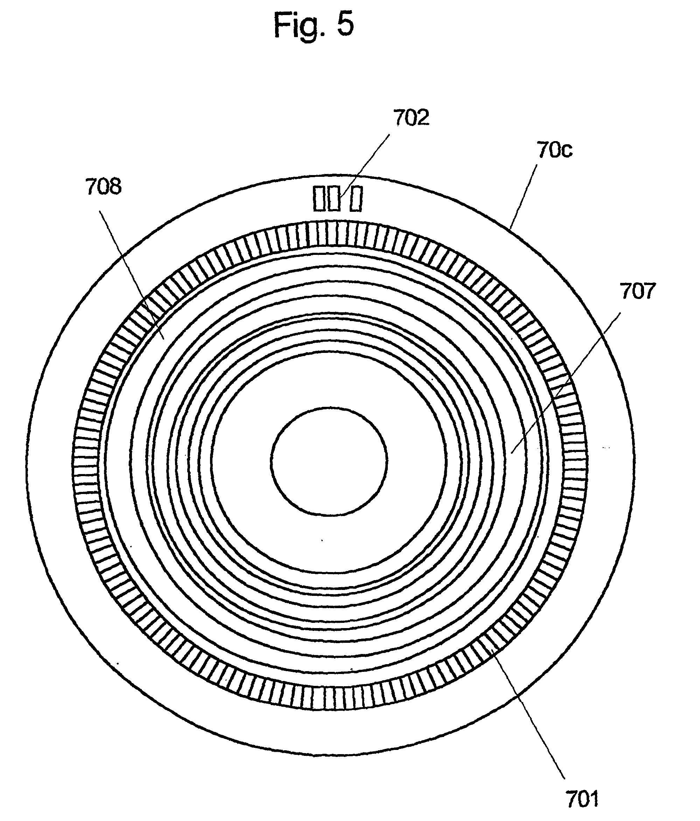

Figur 5 zeigt eine Draufsicht auf eine Teilscheibe 70c, bei der neben einer Referenzmarke 702 und einer Inkrementalspur 701 zwei Spuren 707, 708 radial versetzt zur Inkrementalspur 701 angeordnet sind, aus denen ein Sinus- und Kosinussignal gewonnen wird. Die Breite der Spuren 707, 708 ändert sich über den Umfang und die Maxima beider Spuren sind um 180° zueinander versetzt. Durch Antiparallelschaltung der die Teilscheibe 70c abtastenden Fotoelemente entstehen zur Null-Linie symmetrische Ausgangssignale mit einer Signalperiode pro Umdrehung, aus denen über eine Arcus-Tangens-Berechnung ein Absolutwert für den Blendenöffnungswinkel bzw. den Hell/Dunkelsektor der verstellbaren Umlaufblende 1 gemäß Figur 1 gewonnen wird.

Zur Einstellung eines gewünschten Blendenöffnungswinkels bzw. zur Regelung des Blendenöffnungswinkels ist eine entsprechende Ansteuerung des Blendenverstellflügelmotors 33 gemäß Figur 1 erforderlich. Diese Ansteuerung kann - wie vorstehend anhand der Figur 1 erläutert wurde - über Schleifringe vom Verstärker 13 zum Blendenverstellflügelmotor 33 oder alternativ mit einer in Figur 6 dargestellten Motoransteuerung erfolgen.

Figur 6 zeigt in einem schematischen Blockschaltbild eine Einrichtung zur berührungslosen Energieübertragung sowie eine Elektronik zur Ansteuerung des Blendenverstellflügelmotors 33 und Abgabe von Istwerten der Verstellblende 1 an die Kamera. Die dem Kameraskelett bzw. Kameragehäuse 5 zugeordneten Bauelemente sind in einem linken Block und die der rotierenden, verstellbaren Umlaufblende 1 zugeordneten Bauteile in einem rechten Block zusammengefasst. In die in Fig. 6 dargestellte Elektronik ist ein Controller oder Prozessor 60 zur bidirektionalen Kommunikation zwischen der rotierenden Verstellblende 1 und der Kamera integriert.

Die Energie zur Speisung des mit der Blendenwelle 20 mitrotierenden Blendenverstellflügelmotors 33 wird über eine Energie-Übertragungseinrichtung 61, 62, 63 von der Kamera zur Verstellblende 1 übertragen und besteht aus einem mit Hochfrequenz betriebenen, geteilten Transformator 62, dessen Primärwicklung 621 mit einem primärseitigen Gleichspannungswandler bzw. Wechselrichter 61 und dessen Sekundärwicklung 622 mit einem sekundärseitigen Gleichspannungswandler bzw. Gleichrichter 63 verbunden ist. Der primärseitige Gleichspannungswandler 61 ist an eine Stromversorgungsleitung 48 angeschlossen, während der sekundärseitige Gleichspannungswandler 63 mit einem rotierenden Verstärker 66, insbesondere einem 4-Quadranten-Motorverstärker, verbunden ist, dessen Ausgang den Blendenverstellflügelmotor 33 speist und dessen Steuereingang mit einem ersten Ausgang des Prozessor 60 verbunden ist.

Die Elektronik enthält eine erste Signal-Übertragungseinrichtung 64, 65 zur Stellgrößenübertragung mit einem mit dem Kameragehäuse 5 verbundenen optischen Sender 64, der beispielsweise mit dem Ausgang der Blendenverstellflügel-Positionsregeleinrichtung 12 gemäß Fig. 1 über eine Steuerleitung 47 verbunden ist, die Daten von der Kamera zur rotierenden Baugruppe bzw. Verstellblende 1 überträgt. Die vom optischen Sender 64 abgegebenen optischen Signale werden von einem mit der Verstellblende 1 verbundenen optischen Empfänger 65 empfangen und als Steuersignale an einen ersten Eingang des Prozessors 60 abgegeben.

Eine zweite Signal-Übertragungseinrichtung 68, 69 zur Istwertübertragung weist einen mit der Verstellblende 1 umlaufenden und mit einem zweiten Ausgang des Prozessors 60 verbundenen optischen Sender 68 auf, dessen Signale von einem mit dem Kameragehäuse 5 verbundenen optischen Empfänger 69 empfangen und über eine Steuerleitung 47', die als bidirektionale Steuer- und Datenleitung mit der Steuerleitung 47 identisch sein kann, mit dem Eingang der Blendenverstellflügel-Positionsregeleinrichtung 12 gemäß Fig. 1 verbunden ist und Daten von der Verstellblende 1 zur Kamera überträgt.

Ein zweiter Eingang des Prozessors 60 ist mit dem Ausgang eines Istwert-Messverstärkers 67 verbunden, dessen Eingang an einen mit dem Blendenverstellflügelmotors 33 gekoppelten Potentiometergeber 34 gelegt ist und den jeweiligen Istwert der Stellung der Verstellblende 1 an den Prozessor 60 abgibt.

Anstelle einer bidirektionalen optischen Signalübertragung für die Stellgröße des Blendenverstellflügelmotors 33 kann auch eine bidirektionale induktive Signalübertragung gewählt werden, bei der ein entsprechender Sender mit dem Kameragehäuse 5 und ein Empfänger mit der Verstellblende 1 zur berührungslosen Signalübertragung verbunden ist, wobei die bidirektionale induktive Signalübertragung über einen Impulsübertrager erfolgt, dessen Primärwicklung mit dem Kameraskelett 5 und dessen Sekundärwicklung mit der Verstellblende 1 verbunden ist.

Eine weitere Alternative besteht darin, die Stellgrößen-Übertragungseinrichtung als bidirektionale trägerfrequente Signalübertragungseinrichtung auszubilden, bei der die Stellgrößen und Daten mit einer Trägerfrequenz auf die Energieversorgung des Blendenverstellflügelmotors 33 aufmoduliert werden.

Sowohl bei der optischen als auch bei der induktiven oder trägerfrequenten Signalübertragung kann die bidirektionale Kommunikation entweder im Halb- oder Vollduplex-Verfahren erfolgen. Bei einer Vollduplex-Übertragung erfolgt die Trennung der beiden Datenrichtungen entweder über unterschiedliche Trägerfrequenzen oder bei der optischen Datenübertragung über unterschiedliche Wellenlängen und/oder Teilerprismen.

Bei der in Figur 6 dargestellten berührungslosen Signal- und Energieübertragung wird die den Blendenverstellflügelmotor 33 speisende Energie über den geteilten und mit Hochfrequenz betriebenen Transformator 62 vom statischen Kameraskelett 5 zur rotierenden Umlaufblende 1 übertragen, wobei die übertragene hochfrequente Spannung nach Gleichrichtung im sekundärseitigen Gleichspannungswandler 63 den rotierenden Verstärker 66 mit Energie zur Ansteuerung des Blendenverstellflügelmotors 33 versorgt.

Die Speisung des Blendenverstellflügelmotors 33 vom rotierenden Verstärker 66 erfolgt im Takt der Stellgröße, die über den optischen Sender 64 und optischen Empfänger 65 oder alternativ induktiv über einen Impulsübertrager oder mittels auf die Stromversorgung aufmodulierter Trägerfrequenz vom Kameraskelett 5 zur rotierenden Umlaufblende 1 übertragen wird.

**Bezugszeichenliste**

| | |
|---|---|
| 1 | Umlaufblende |
| 2 | Blendenflügel |
| 3 | Blendenverstellflügel |
| 5 | Kameraskelett (Kameragehäuse) |
| 6 | Übertragungseinrichtung |

| | |
|---|---|
| 7,8 | Sensor |
| 9 | Sicherheitsabtasteinrichtung |
| 10 | digitale Positionszähl- und Differenzbildungseinrichtung |
| 11 | Steuerlogik |
| 12 | Blendenverstellflügel-Positionsregeleinrichtung |
| 13 | Verstärker |
| 14 | Blendenflügel-Abtasteinrichtung |
| 15, 16 | Kamera-Schnittstelle |
| 20 | Blendenwelle |
| 21 | Antriebsritzel |
| 23 | Öffnung in Blendenwelle |
| 30 | Blendenverstellflügelwelle |
| 31 | Planetengetriebe |
| 32 | Blendenverstellflügelgetriebe |
| 33 | Blendenverstellflügelmotor |
| 34 | Potentiometergeber |
| 40 | Verbindungsleitung |
| 41-47 | Leitungen |
| 51-54 | Kugellager |
| 60 | Prozessor |
| 61 | primärseitiger Gleichspannungswandler bzw. Wechselrichter |
| 62 | Transformator |
| 63 | sekundärseitiger Gleichspannungswandler bzw. Gleichrichter |
| 64 | Optischer Sender der Stellgrößen-Übertragungseinrichtung |
| 65 | Optischer Empfänger der Stellgrößen-Übertragungseinrichtung |
| 66 | Stellgrößen-Verstärker |
| 67 | Istwert-Messverstärker |
| 68 | Optischer Sender der Istwert-Übertragungseinrichtung |
| 69 | Optischer Empfänger der Istwert-Übertragungseinrichtung |
| 70,80, 70a-c | Teilscheibe |
| 71, 81 | Abtasteinrichtung |
| 621 | Primärwicklung des Transformators |
| 622 | Sekundärwicklung des Transformators |
| 701 | Inkrementalspur |
| 702 | Referenzmarke |
| 703-706 | Codespur |
| 707, 708 | Sinus/Cosinusspur |
| 711 | Halbleiter-Lichtquelle |
| 712 | Kondensorlinse |
| 713 | Abtastplatte |
| 714-717 | Fotoelemente |

**Patentansprüche**

1. Verfahren zur Erfassung des Blendenöffnungswinkels bzw. Hell- oder Dunkelsektors einer in einer Laufbildkamera angeordneten verstellbaren Umlaufblende (1), die aus einem über eine Blendenwelle (20) von einem Blendenmotor angetriebenen, kreissegment- oder kreissektorförmigen Blendenflügel (2) und einem koaxial zum Blendenflügel angeordneten und gegenüber diesem mittels eines Blendenverstellflügelmotors (33) verstellbaren Blendenverstellflügel (3) besteht,
**dadurch gekennzeichnet,**
**dass** die Position des Blendenflügels (2) und die Position des Blendenverstellflügels (3) während einer Umdrehung der Umlaufblende (1) erfasst und die Differenz beider Positionen als Wert für den Blendenöffnungswinkel bzw. den Hell- oder Dunkelsektor der Umlaufblende (1) gebildet wird.

2. Verfahren nach Anspruch 1, **dadurch gekennzeichnet, dass** die absolute Position des Blendenflügels (2) und die absolute Position des Blendenverstellflügels (3) mit einer Auflösung von n Schritten während einer Umdrehung der Umlaufblende (1) erfasst und der Blendenöffnungswinkel der Umlaufblende (1) aus der Beziehung

$$\alpha = P_{BF} - P_{VF} * 360° / n$$

mit

$P_{BF}$ der Position des Blendenflügels und
$P_{VF}$ der Position des Blendenverstellflügels

bestimmt wird, wobei bei einem Winkel $\alpha$, der kleiner als 0° ist, der Wert solange um 360° erhöht wird, bis er größer oder gleich 0° ist oder bei einem Winkel $\alpha$, der größer gleich 360° ist, der Wert solange um 360° reduziert wird, bis er kleiner 360° ist.

3. Verfahren nach Anspruch 2, **dadurch gekennzeichnet, dass** die absoluten Positionen des Blendenflügels (2) und des Blendenverstellflügels (3) aus codierten Sensorspuren ermittelt werden.

4. Verfahren nach Anspruch 3, **dadurch gekennzeichnet, dass** die absoluten Positionen des Blendenflügels (2) und des Blendenverstellflügels (3) als Sinus- und Kosinus-Signal pro Umdrehung der Umlaufblende (1) erfasst und über eine Arcus-Tangens-Berechnung aus dem Sinus- und Kosinus-Signal der Blendenöffnungswinkel der Umlaufblende (1) bestimmt wird.

5. Verfahren nach mindestens einem der vorstehenden Ansprüche, **dadurch gekennzeichnet, dass** die Positionen des Blendenflügels (2) und des Blendenverstellflügels (3) inkremental erfasst werden, dass mindestens ein Index- oder Referenzmarkensignal pro Umdrehung der Umlaufblende (1) vorgesehen ist und dass die erfassten Inkrementalsignale beim Auftreten des Referenzmarkensignals gespeichert und der Blendenöffnungswinkel ($\alpha$) der Umlaufblende (1)aus der Beziehung

$$\alpha = (Z_{BF} - Z_{VF} + K) * 360/n$$

mit

Z$_{BF}$ dem Zählerstand des Blendenflügels,

Z$_{VF}$ dem Zählerstand des Blendenverstellflügels und

O einem konstanten Offset, der aus der Beziehung

$$O = I_{BF} + I_{VF} + K$$

mit

I$_{BF}$ der Indexposition des Blendenflügels,

I$_{VF}$ der Indexposition des Blendenverstellflügels und

K einem Kalibrierwert

bestimmt wird, wobei bei einem Winkel $\alpha$, der kleiner als 0° ist, der Wert solange um 360° erhöht wird, bis er größer oder gleich 0° ist oder bei einem Winkel $\alpha$, der größer gleich 360° ist, der Wert solange um 360° reduziert wird, bis er kleiner 360° ist, und der Kalibrierwert (K) ein sich aus der Beziehung der mit den Umdrehungen des Blendenflügels (2) und den Umdrehungen des Blendenverstellflügels (3) gekoppelten Referenzmarken ergebender Korrekturwert ist.

6. Verfahren nach mindestens einem der voranstehenden Ansprüche, **dadurch gekennzeichnet, dass** die absoluten Positionen des Blendenflügels (2) und des Blendenverstellflügels (3) aus abstandscodierten Referenzmarken ermittelt werden.

7. Verfahren nach mindestens einem der voranstehenden Ansprüche zur Erfassung, Einstellung und/ oder Regelung des Blendenöffnungswinkels (Hell- oder Dunkelsektors) der in einer Laufbildkamera angeordneten verstellbaren Umlaufblende, **dadurch gekennzeichnet, dass** der aus der Differenz der Position des Blendenflügels (2) und des Blendenverstellflügels (3) ermittelte Hell- oder Dunkelsektor als Istwert einer Blendenverstellflügel-Positionsregeleinrichtung (12) zugeführt wird, an die ein über eine Schnittstelle (15) zur Kamerasteuerung eingegebener Sollwert des Hell- oder Dunkelsektors abgegeben wird und die aus der Differenz des Soll- und Istwertes des Hell- oder Dunkelsektors eine Stellgröße für den Blendenverstellflügelmotor (33) bildet.

8. Verfahren nach mindestens einem der voranstehenden Ansprüche, **dadurch gekennzeichnet, dass** die Positionen des Blendenflügels (2) und des Blendenverstellflügels (3) vor der Differenzbildung interpoliert werden.

9. Verfahren nach mindestens einem der voranstehenden Ansprüche, **dadurch gekennzeichnet, dass** eine mechanische Ver- oder Entriegelung des Blendenverstellflügels (3) mit vorgegebener Frequenz abgetastet und bei mechanischer Verriegelung des Blendenverstellflügels (3) eine Ansteuerung des Blendenverstellflügelmotors (33) blockiert wird.

10. Verfahren nach mindestens einem der voranstehenden Ansprüche, **dadurch ge kennzeichnet, dass** die die Position des Blendenflügels (2) und des Blendenverstellflügels (3) angebenden Positionssignale, der Absolutwert des Hell- oder Dunkelsektors der verstellbaren Umlaufblende (1) und die die mechanische Ver- oder Entriegelung des Blendenverstellflügels (3) abtastenden Signale in einer Steuerlogik (11) bearbeitet werden.

11. Verfahren nach Anspruch 10, **dadurch gekennzeichnet, dass** die Steuerlogik (11) die Positionserfassungen initialisiert.

12. Verfahren nach mindestens einem der voranstehenden Ansprüche, **dadurch gekennzeichnet, dass** die Stellgröße für den Blendenverstellflügelmotor (33) berührungslos von der Blendenverstellflügel-Positionsregeleinrichtung (12) zum Blendenverstellflügelmotor (33) übertragen wird.

13. Vorrichtung zur Erfassung des Blendenöffnungswinkels bzw. Hell- oder Dunkelsektors einer in einer Laufbildkamera eordneten verstellbaren Umlaufblende (1), die aus einem über eine Blendenwelle (20) von einem Blendenmotor angetriebenen, kreissegment- oder kreissektorförmigen Blendenflügel (2) und einem koaxial zum Blendenflügel angeordneten und gegenüber diesem mittels eines Blendenverstellflügelmotors (33) verstellbaren Blendenverstellflügel (3) besteht, **gekennzeichnet durch**

- einen mit dem Blendenflügel (2) gekoppelten Sensor (7) zur Abtastung der Blendenflügelposition und Abgabe von Blendenflügel-Positionssignalen,

- einen mit dem Blendenverstellflügel (3) gekoppelten Sensor (8) zur Abtastung der Blendenverstellflügelposition und Abgabe von Blendenverstellflügel-Positionssignalen,

- einen mit den Blendenflügel-Positionssignalen und den Blendenverstellflügel-Positionssignalen beaufschlagten Positionszähler (10) zur Bildung der Differenz der Blendenflügel-Positionssignale und der Blendenverstellflügel-Positionssignale,

14. Vorrichtung nach Anspruch 13, **dadurch gekennzeichnet, dass** die Sensoren (7, 8) aus absoluten Winkelmessgeräten mit mehreren auf einer Teilscheibe (70b) angeordneten Codespuren (701, 703 - 706) und den Codespuren (701, 703 - 706) zugeordneten Abtasteinrichtungen (716, 717) bestehen.

15. Vorrichtung nach Anspruch 14, **dadurch gekennzeichnet, dass** die absoluten Winkelmessgeräte aus Absolutencodern, Resolvern oder Polradsensoren bestehen.

16. Vorrichtung nach Anspruch 13, **dadurch gekennzeichnet, dass** die Sensoren (7, 8) aus inkrementalen Winkelmessgeräten mit einer auf einer Teilscheibe (70a) angeordneten periodischen Inkrementalspur (701) und einer Referenzmarkenspur (702), die mindestens eine die absolute Position der Teilscheibe (70a) festlegende und diese einem Messschritt zuordnende Referenzmarke aufweist, und der Inkremental- und Referenzmarkenspur (701, 702) zugeordneten Abtasteinrichtungen (714, 715) bestehen.

17. Vorrichtung nach Anspruch 16, **dadurch gekennzeichnet, dass** die Referenzmarkenspur abstandscodierte Referenzmarken aufweist, auf der Referenzmarken mit definiert unterschiedlichem Abstand aufgebracht sind.

18. Vorrichtung nach mindestens einem der Ansprüche 14 bis 17, **dadurch gekennzeichnet, dass** die Sensoren (7, 8) Teilscheiben (70c) mit zusätzlichen Sinus- und Kosinusspuren (707, 708) aufweisen und dass eine der die Sensorsignale der Sinus- und Kosinussignale erfassenden Abtasteinrichtung nachgeschaltete Berechnungseinheit mit den Sinus- und Kosinussignalen beaufschlagt ist und aus den Sinus- und Kosinussignalen berechnete Arcus-Tangens-Werte abgibt.

19. Vorrichtung nach mindestens einem der voranstehenden Ansprüche, **dadurch gekennzeichnet, dass** die Sensoren (7, 8) als absolute oder inkrementale Winkelmessgeräte mit photoelektrischer, magneto-resistiver oder permanentmagnetischer Abtastung ausgebildet sind.

20. Vorrichtung nach mindestens einem der voranstehenden Ansprüche 13 bis 19 zur Erfassung, Einstellung und/oder Regelung des Blendenöffnungswinkels (Hell- oder Dunkelsektors) der in einer Laufbildkamera angeordneten verstellbaren Umlaufblende,
**gekennzeichnet durch**

- eine mit der Differenz der Blendenflügel-Positionssignale und der Blendenverstellflügel-Positionssignale beaufschlagte und mit einer Schnittstelle (19) für die Steuerung der Laufbildkamera verbundene Steuerlogik (11) und

- eine Blendenverstellflügel-Positionsregeleinrichtung (12), die eingangsseitig mit der Differenz der Blendenflügel-Positionssignale und der Blendenverstellflügel-Positionssignale sowie mit einem von der Steuerung der Laufbildkamera über eine Schnittstelle (15) abgegebenen Sollwert für den Blendenverstellflügel (3) oder für den Hellsektor (Dunkelsektor) der verstellbaren Umlaufblende (1) beaufschlagt ist und ausgangsseitig eine Stellgröße für den Blendenverstellflügelmotor (33) abgibt.

21. Vorrichtung nach mindestens einem der voranstehenden Ansprüche 13 bis 20, **gekennzeichnet durch** eine im Rotationsbereich der verstellbaren Umlaufblende (1) angeordnete Sicherheits-Abtasteinrichtung (9) zur Erfassung des Hell- oder Dunkelsektors der verstellbaren Umlaufblende (1), deren Ausgang zur Abgabe von Absolutwerten des Hell- oder Dunkelsektors der verstellbaren Umlaufblende (1) mit der Steuerlogik (11) verbunden ist.

22. Vorrichtung nach Anspruch 20 oder 21, **dadurch gekennzeichnet, dass** die Steuerlogik (11) eingangsseitig mit einer Abtasteinrichtung (14) zur Erfassung der mechanischen Verriegelung des Blendenverstellflügels (3) verbunden ist und die Ansteuerung des Blendenverstellflügelmotors (33) bei aktivierter mechanischer Verriegelung des Blendenverstellflügels (3) blockiert.

23. Vorrichtung nach mindestens einem der voranstehenden Ansprüche 13 bis 22, **dadurch gekennzeichnet, dass** die Blendenverstellflügel-Positionsregeleinrichtung (12) über eine Einrichtung (13) zur Ansteuerung des Blendenverstellflügelmotors (33) mit einer Energie- und Signal-Übertragungseinrichtung (61, 62, 63; 64, 65, 68, 69) zur Steuerung bzw. Speisung des Blendenverstellflügelmotors (33) verbunden ist.

24. Vorrichtung nach mindestens einem der voranstehenden Ansprüche 13 bis 23, **dadurch gekennzeichnet, dass** die Blendenverstellflügel-Positionsregeleinrichtung (12) über die Energie-Übertragungseinrichtung (61, 62, 63) mit einem Motorverstärker (66) sowie über die Signal-Übertragungseinrichtung (64, 65, 68, 69) mit einem Prozessor (60) zur Steuerung und Regelung des Blendenverstellflügelmotors (33) verbunden ist.

25. Vorrichtung nach Anspruch 24, **dadurch gekennzeichnet, dass** der Steuereingang des mit der Energie-Übertragungseinrichtung (61, 62, 63) verbundenen Motorverstärkers (66) mit einem ersten Ausgang des Prozessors (60) verbunden ist, der mit einem ersten Eingang an den Ausgang eines Istwert-Messverstärkers (67) angeschlossen ist, der mit einem mit dem Blendenverstellflügelmotor (33) gekoppelten Potentiometergeber (34) verbunden ist, und dass jeweils ein zweiter Eingang und Ausgang des Prozessors (60) mit der bidirektionalen Signal-Übertragungseinrichtung (64, 65; 68, 69) verbunden ist.

26. Vorrichtung nach einem der voranstehenden Ansprüche 23 bis 25, **gekennzeichnet durch** eine berührungslose Energie-Übertragungseinrichtung (61, 62, 63) und/oder eine berührungslose Signal-Übertragungseinrichtung (64, 65, 68, 69).

27. Vorrichtung nach einem der voranstehenden Ansprüche 23 bis 26, **dadurch gekennzeichnet, dass** die Energie-Übertragungseinrichtung (61, 62, 63) aus einem mit Hochfrequenz betriebenen, geteilten Transformator (62) besteht, dessen Primärwicklung(621) mit einem primärseitigen Gleichspannungswandler (61) und dessen Sekundärwicklung (622) mit einem sekundärseitigen Gleichspannungswandler (63) verbunden ist.

28. Vorrichtung nach einem der voranstehenden Ansprüche 23 bis 27, **dadurch gekennzeichnet, dass** die Signal-Übertragungseinrichtung (64, 65; 68, 69) aus jeweils einem optischen Sender (64, 68) und einem optischen Empfänger (65, 69) zum bidirektionalen Signalaustausch zwischen der Blendenverstellflügel-Positionsregeleinrichtung (12) und dem Prozessor (60) besteht.

29. Vorrichtung nach einem der voranstehenden Ansprüche 23 bis 27, **dadurch gekennzeichnet, dass** die Signal-Übertragungseinrichtung aus einer induktiven Signalübertragungseinrichtung zum bidirektionalen Signalaustausch zwischen der Blendenverstellflügel-Positionsregeleinrichtung (12) und dem Prozessor (60) besteht.

30. Vorrichtung nach einem der voranstehenden Ansprüche 23 bis 27, **dadurch gekennzeichnet, dass** die Signal-Übertragungseinrichtung aus einer trägerfrequenten Signalübertragungseinrichtung zum bidirektionalen Signalaustausch zwischen der Blendenverstellflügel-Positionsregeleinrichtung (12) und dem Prozessor (60) besteht, bei der die Signale mit einer Trägerfrequenz auf die Energieversorgung des Blendenverstellflügelmotors (33) aufmoduliert sind.

31. Vorrichtung nach mindestens einem der voranstehenden Ansprüche 13 bis 24, **dadurch gekennzeichnet, dass** die Blendenverstellflügel-Positionsregeleinrichtung (12) über eine Motorendstufe (13) und eine Drehdurchführung oder einen Schleifring (6) den Blendenverstellflügelmotor (33) ansteuert.

32. Vorrichtung nach mindestens einem der voranstehenden Ansprüche 13 bis 30, **dadurch gekennzeichnet, dass** die Sensoren (7, 8) zur Abtastung der Blendenflügelposition und der Blendenverstellflügelposition mit der Blendenwelle (20) und der Blendenverstellflügelwelle (30) gekoppelt sind.

33. Vorrichtung nach mindestens einem der voranstehenden Ansprüche 13 bis 31, **dadurch gekennzeichnet, dass** die Blendenwelle (20) über ein Getriebe (21) mit einem Blendenantrieb verbunden ist.

34. Vorrichtung nach mindestens einem der voranstehenden Ansprüche 13 bis 32, **dadurch gekennzeichnet, dass** der Blendenverstellflügel (3) über eine Blendenverstellflügelwelle (30) und ein durch die Blendenwelle (20) geführtes Getriebe (31, 32) mit dem Blendenverstellflügelmotor (33) verbunden ist.

**Claims**

1. Method for detecting the shutter opening angle, light or dark sector respectively, of an adjustable rotatable shutter (1) mounted in a film camera which consists of a circular segment or circular sector shaped shutter vane (2) driven through a shutter shaft (20) by a shutter motor, and of a shutter adjustment vane (3) mounted coaxial with the shutter vane and adjustable relative thereto by means of a shutter adjustment vane motor (33),
   **characterised in that**
   the position of the shutter vane (2) and the position of the shutter adjustment vane (3) are detected during rotation of the rotatable shutter (1) and the difference between the two positions is formed as a value for the shutter opening angle or the light or dark sector of the rotatable shutter (1).

2. Method according to claim 1, **characterised in that** the absolute position of the shutter vane (2) and the absolute position of the shutter adjustment vane (3) is detected with a resolution of $n$ steps during one revolution of the rotatable shutter (1) and the shutter opening angle of the rotatable shutter (1) is determined from the equation

$$\alpha = P_{BF} - P_{VF} \; 8 \; 360° \; /n$$

with

   $P_{BF}$ the position of the shutter vane and
   $P_{VF}$ the position of the shutter adjustment vane

wherein with an angle $\alpha$ which is less than 0° the value is increased around 360° so long until it is greater than or equal to 0° or with an angle $\alpha$ which is greater than or equal to 360° the value is reduced around 360° so long until it is less than 360°.

3. Method according to claim 2, **characterised in that** the absolute positions of the shutter vane (2) and the shutter adjustment vane (3) are determined from coded sensor tracks.

4. Method according to claim 3, **characterised in that** the absolute positions of the shutter vane (2) and the shutter adjustment vane (3) are detected as a sine and cosine signal per revolution of the rotating shutter (1) and the shutter opening angle of the rotating shutter (1) is determined through an arctan calculation from the sine and cosine signal.

5. Method according to at least one of the preceding claims, **characterised in that** the positions of the shutter vane (2) and the shutter adjustment vane (3) are detected incrementally, that at least one index or reference mark signal is provided per revolution of the rotatable shutter (1) and that the detected incremental signals are stored with the appearance of the reference mark signal and the shutter opening angle ($\alpha$) of the rotatable shutter (1) is determined from the equation

$$\alpha = (Z_{BF} - Z_{VF} + K) * 360/n$$

with

   $Z_{BF}$ the counter state of the shutter vane
   $Z_{VF}$ the counter state of the shutter adjustment vane and
   O a constant off-set which is determined from the equation

$$O = I_{BF} + I_{VF} + K$$

with

   $I_{BF}$ the index position of the shutter vane

   $I_{VF}$ the index position of the shutter adjustment vane and

   K a calibrating value

wherein with an angle $\alpha$ which is less than 0° the value is increased around 360° so long until it is greater than or equal to 0° or with an angle $\alpha$ which is greater than equal to 360° the value is reduced around 360° so long until it is less than 360° and the calibrating value (K) is a correcting value arising from the relationship of the reference marks which are coupled to the revolutions of the shutter vane (2) and the revolutions of the shutter adjustment vane (3).

6. Method according to at least one of the preceding claims, **characterised in that** the absolute positions of the shutter vane (2) and the shutter adjustment vane (3) are determined from distance-coded reference marks.

7. Method according to at least one of the preceding claims for detecting, adjusting and/or regulating the shutter opening angle (light or dark sector) of the rotatable shutter which is mounted in a film camera, **characterised in that** the light or dark sector determined from the difference between the positions of the shutter vane (2) and the shutter adjustment vane (3) is supplied as actual value to a shutter adjustment vane position regulating device (12) at which an ideal value of the light or dark sector inputted through an interface (15) to the camera control, is emitted and which forms from the difference between the ideal and actual value of the light or dark sector a setting variable for the shutter adjustment vane motor (33).

8. Method according to at least one of the preceding claims, **characterised in that** the positions of the shutter vane (2) and shutter adjustment vane (3) are interpolated before the formation f the difference.

9. Method according to at least one of the preceding claims, **characterised in that** a mechanical locking or unlocking of the shutter adjustment vane (3) is scanned with predetermined frequency and in the event of mechanical locking of the shutter adjustment vane (3) a control of the shutter adjustment vane motor (33) is blocked.

10. Method according to at least one of the preceding claims, **characterised in that** the position signals indicating the position of the shutter vane (2) and the shutter adjustment vane (3), the absolute value of the light or dark sector of the adjustable rotatable shutter (1) and the signals scanning the mechanical locking or unlocking of the shutter adjustment vane (3) are processed in a control logic (11).

11. Method according to claim 10, **characterised in that** the control logic (11) initialises the position detections.

12. Method according to at least one of the preceding claims, **characterised in that** the setting value for the shutter adjustment vane motor (33) is transferred contactlessly by the shutter adjustment vane position regulating device (12) to the shutter adjustment vane motor (33).

13. Device for detecting the shutter opening angle, light or dark sector respectively, of an adjustable rotatable shutter (1) mounted in a film camera which consists of a circular segment or circular sector shaped shutter vane (2) driven through a shutter shaft (20) by a shutter motor, and of a shutter adjustment vane (3) mounted coaxial with the shutter vane and adjustable relative thereto by means of a shutter adjustment vane motor (33),
   **characterised by**

   - a sensor (7) coupled to the shutter vane (2) for scanning the shutter vane position and emitting shutter vane position signals

   - a sensor (8) coupled to the shutter adjustment vane (3) for scanning the shutter adjustment vane position and emitting shutter adjustment vane position signals

   - a position counter (10) charged with the shutter vane position signals and the shutter adjustment vane position signals for forming the difference between the shutter vane position signals and the shutter adjustment vane position signals.

14. Device according to claim 13, **characterised in that** the sensors (7, 8) consist of absolute angle measuring instruments with several code tracks (701, 703-706) mounted on a graduated plate (70b) and scanning devices (716, 717) assigned to the code tracks (701, 703-706).

15. Device according to claim 14, **characterised in that** the absolute angle measuring instruments consist of absolute coders, resolvers or pole wheel sensors.

16. Device according to claim 13, **characterised in that** the sensors (7, 8) consist of incremental angle measuring instruments with a periodic incremental track (701) mounted on a graduated plate (70a) and a reference mark track (702) which has at least one reference mark fixing the absolute position of the graduated plate (70a) and assigning this to a measuring step, and of scanning devices (71, 715) associated with the incremental and reference mark track (701, 702).

17. Device according to claim 16, **characterised in that** the reference mark track has distance-coded reference marks on which reference marks are made with defined variable spacing.

18. Device according to at least one of claims 14 to 17, **characterised in that** the sensors (7, 8) have graduated plates (70c) with additional sine and cosine tracks (707, 708) and that a computing unit connected in on the output side of the scanning device detecting the sensor signals of the sine and cosine signals is charged with the sine and cosine signals and issues arctan values calculated from the sine and cosine signals.

19. Device according to at least one of the preceding claims, **characterised in that** the sensors (7, 8) are formed as absolute or incremental angle measuring instruments with photo electric, magneto resistive or permanent magnetic scanning.

20. Device according to at least one of the preceding claims 13 to 19 for detecting, setting and/or regulating the shutter opening angle (light or dark sector) of the adjustable rotatable shutter mounted in a film camera,
   **characterised by**

   - a control logic (11) charged with the difference between the shutter vane position signals and the shutter adjustment vane position signals and connected to an interface (19) for the control of the film camera and

   - a shutter adjustment vane position regulating device (12) which is charged on the input side with the difference of the shutter vane position signals and the shutter adjustment vane position signals as well as with an ideal value issued by the control of the film camera through an interface (15) for the shutter adjustment vane (3) or for the light sector (dark sector) of the adjustable rotatable shutter (1) and on the output side issues a setting variable for the shutter adjustment vane motor (33).

21. Device according to at least one of the preceding claims 13 to 20, **characterised by** a safety scanning device (9) mounted in the rotational area of the adjustable rotatable shutter (1) for detecting the light or dark sector of the adjustable rotatable shutter (1) whose output is connected to the control logic (11) for issuing absolute values of the light or dark sector of the adjustable rotatable shutter (1).

22. Device according to claim 20 or 21, **characterised in that** the control logic (11) is connected on the input side to a scanning device (14) for detecting the mechanical locking of the shutter adjustment vane (3) and blocks the control of the shutter adjustment vane motor (33) in the event of activated mechanical locking of the shutter adjustment vane (3).

23. Device according to at least one of the preceding claims 13 to 22, **characterised in that** the shutter adjustment vane position regulating device (12) is connected through a device (13) for controlling the shutter adjustment vane motor (33) to an energy and signal transfer device (61, 62, 63, 64, 65, 68, 69) for controlling or feeding the shutter adjustment vane motor (33).

24. Device according to at least one of the preceding claims 13 to 23, **characterised in that** the shutter adjustment vane position regulating device (12) is connected through the energy transfer device (61, 62, 63) to a motor amplifier (66) as well as through the signal transfer device (64, 65, 68, 69) to a processor (60) for controlling and regulating the shutter adjustment vane motor (33).

25. Device according to claim 24, **characterised in that** the control device of the motor amplifier (66) connected to the energy transfer device (61, 62, 63) is connected to a first output of the processor (60) which is connected by a first input to the output of an actual value measuring amplifier (67) which is connected to a potentiometer transmitter (34) coupled to the shutter adjustment vane motor (33), and that each one second input and output of the processor (60) is connected to the bi-directional signal transfer device (64, 65; 68, 69).

26. Device according to one of the preceding claims 23 to 25, **characterised by** a contactless energy transfer device (61, 62, 63) and/or a contactless signal transfer device (64, 65, 68, 69).

27. Device according to one of the preceding claims 23 to 26, **characterised in that** the energy transfer device (61, 62, 63) consists of a divided transformer (62) operated at high frequency and whose primary winding (621) is connected to a direct current converter (61) on the primary side and whose secondary winding (622) is connected to a direct current converter (63) on the secondary side.

28. Device according to one of the preceding claims 23 to 27, **characterised in that** the signal transfer device (64, 65; 68, 69) each consists of an optical transmitter (64, 68) and an optical receptor (65, 69) for the bi-directional signal exchange between the shutter adjustment vane position regulating device (12) and the processor (60).

29. Device according to one of the preceding claims 23 to 27, **characterised in that** the signal transfer device consists of an inductive signal transfer device for the bi-directional signal exchange between the shutter adjustment vane position regulating device (12) and the processor (60).

30. Device according to one of the preceding claims 23 to 27, **characterised in that** the signal transfer device consists of a carrier frequency signal transfer device for the bi-directional signal exchange between the shutter adjustment vane position regulating device (12) and the processor (60) with which the signals are modulated up with a carrier frequency to the energy supply of the shutter adjustment vane motor (33).

31. Device according to at least one of the preceding claims 13 to 24, **characterised in that** the shutter adjustment vane position regulating device (12) controls the shutter adjustment vane motor (33) through a motor end stage (13) and a rotational connection or a slip ring (6).

32. Device according to at least one of the preceding claims 13 to 30, **characterised in that** the sensors (7, 8) for scanning the shutter vane position and the shutter adjustment vane position are coupled to the shutter shaft (20) and the shutter adjustment vane shaft (30).

33. Device according to at least one of the preceding claims 13 to 31, **characterised in that** the shutter shaft (20) is connected to a shutter drive through gearing (21).

34. Device according to at least one of the preceding claims 13 to 32, **characterised in that** the shutter adjustment vane (3) is connected to the shutter adjustment vane motor (33) through a shutter adjustment vane shaft (30) and a gearing (31, 32) guided through the shutter shaft (20).

**Revendications**

1. Procédé de détection de l'angle d'ouverture de diaphragme ou du secteur clair/obscur d'un obturateur rotatif (1) réglable agencé dans une caméra, obturateur rotatif qui est constitué par une pale d'obturateur (2) en forme de secteur de cercle ou de segment de cercle entraînée par un moteur d'obturateur via un arbre d'obturateur (20) et par une pale de réglage d'obturateur (3) agencée coaxialement par rapport à la pale d'obturateur et réglable par rapport à celle-ci au moyen d'un moteur de pale de réglage d'obturateur (33),
**caractérisé en ce que**
la position de la pale d'obturateur (2) et la position de la pale de réglage d'obturateur (3) est détectée pendant un tour de l'obturateur rotatif (1), et la différence entre les deux positions est établie à titre de valeur pour l'angle d'ouverture de diaphragme ou pour le secteur clair/obscur, respectivement, de l'obturateur rotatif (1).

2. Procédé selon la revendication 1, **caractérisé en ce que** la position absolue de la pale d'obturateur (2) et la position absolue de la pale de réglage d'obturateur (3) avec une résolution de n pas sont détectées pendant un tour de l'obturateur rotatif (1), et l'angle d'ouverture de diaphragme de l'obturateur rotatif (1) est déterminé, à partir de la relation

$$\alpha = P_{BF} - P_{VF} * 360°/n$$

dans laquelle

$P_{BF}$ est la position de la pale d'obturateur et $P_{VF}$ est la position de la pale de réglage d'obturateur,

et pour un angle $\alpha$ qui est inférieur à 0°, la valeur est augmentée d'autant de fois 360° jusqu'à ce qu'elle soit supérieure ou égale à 0°, ou pour un angle $\alpha$ qui est supérieur ou égal à 360°, la valeur est réduite d'autant de fois 360° jusqu'à ce qu'elle soit inférieure à 360°.

3. Procédé selon la revendication 2, **caractérisé en ce que** les positions absolues de la pale d'obturateur (2) et de la pale de réglage d'obturateur (3) sont déterminées à partir de pistes de capteur codées.

4. Procédé selon la revendication 3, **caractérisé en ce que** les positions absolues de la pale d'obturateur (2) et de la pale de réglage d'obturateur (3) sont détectées sous forme de signal sinus et de signal cosinus par tour de l'obturateur rotatif (1) et l'ange d'ouverture de diaphragme de l'obturateur rotatif (1) est déterminé via un calcul d'arctangente à partir du signal sinus et du signal cosinus.

5. Procédé selon l'une au moins des revendications précédentes, **caractérisé en ce que** les positions de la pale d'obturateur (2) et de la pale de réglage d'obturateur (3) sont détectées de manière incrémentielle, **en ce qu'**on prévoit au moins un signal d'indice ou de trait de repère par tour de l'obturateur rotatif (1), et **en ce que** les signaux incrémentiels détectés sont mémorisés à l'apparition du signal de trait de repère, et l'angle d'ouverture de diaphragme ($\alpha$) de l'obturateur (1) est déterminé à partir de la relation

$$\alpha = (Z_{BF} - Z_{VF} + K) * 360°/n$$

dans laquelle

$Z_{BF}$ est la position de compteur de la pale d'obturateur,

$Z_{VF}$ est la position de compteur de la pale de réglage d'obturateur, et

O est un offset constant qui est déterminé à partir de la relation

$$O = I_{BF} + I_{VF} + K$$

dans laquelle

$I_{BF}$ est la position d'indice de la pale d'obturateur,

$I_{VF}$ est la position d'indice de la pale de réglage d'obturateur, et

K est une valeur de calibrage,

et pour un angle $\alpha$ qui est inférieur à 0°, la valeur est augmentée d'autant de fois 360° jusqu'à ce qu'elle soit supérieure ou égale à 0°, ou pour un angle $\alpha$ qui est supérieur ou égal à 360°, la valeur est réduite d'autant de fois 360° jusqu'à ce qu'elle soit inférieure à 360°, et la valeur de calibrage (K) est une valeur de correction qui résulte de la relation des traits de repère couplés aux nombres de tours de la pale d'obturateur (2) et au nombres de tours de la pale de réglage d'obturateur (3).

6. Procédé selon l'une au moins des revendications précédentes, **caractérisé en ce que** les positions absolues de la pale d'obturateur (2) et de la pale de réglage d'obturateur (3) sont déterminées à partir de traits de repères à codage de distance.

7. Procédé selon l'une au moins des revendications précédentes pour détecter, régler et/ou réguler l'angle d'ouverture de diaphragme (secteur clair/obscur) de l'obturateur rotatif réglable agencé dans une caméra, **caractérisé en ce que** le secteur clair/obscur déterminé à partir de la différence de position de la pale d'obturateur (2) et de la pale de réglage d'obturateur (3) est amené en tant que valeur réelle à un dispositif de réglage de position (12) de pale de réglage d'obturateur auquel est fournie une valeur consigne du secteur clair/obscur introduite via une interface (15) pour commander la caméra, et qui forme à partir de la différence entre la valeur de consigne et la valeur réelle du secteur clair/obscur une valeur de réglage pour le moteur de pale de réglage de d'obturateur (33).

8. Procédé selon l'une au moins des revendications précédentes, **caractérisé en ce que** les positions de la pale d'obturateur (2) et de la pale de réglage d'obturateur (3) sont interpolées avant l'établissement de la différence.

9. Procédé selon l'une au moins des revendications précédentes, **caractérisé en ce qu'**un verrouillage ou déverrouillage mécanique de la pale de réglage d'obturateur (3) est détecté avec une fréquence prédéterminée, et dans le cas de verrouillage mécanique de la pale de réglage d'obturateur (3), un pilotage du moteur de pale de réglage de d'obturateur (33) est bloqué.

10. Procédé selon l'une au moins des revendications précédentes, **caractérisé en ce que** les signaux de position indiquant la position de la pale d'obturateur (2) et de la pale de réglage d'obturateur (3), la valeur absolue du secteur clair/obscur de l'obturateur rotatif réglable (1) et les signaux détectant le verrouillage ou le déverrouillage mécanique de la pale de réglage d'obturateur (3) sont traités dans une logique de commande (11).

11. Procédé selon la revendication 10, **caractérisé en ce que** la logique de commande (11) initialise les détections de positions.

12. Procédé selon l'une au moins des revendications précédentes, **caractérisé en ce que** la valeur de réglage pour le moteur de pale de réglage d'obturateur (33) est transmise sans contact depuis le dispositif de réglage de position (12) de la pale de réglage d'obturateur jusqu'au moteur de pale de réglage d'obturateur (33).

13. Dispositif de détection de l'angle d'ouverture de diaphragme ou du secteur clair/obscur d'un obturateur rotatif (1) réglable agencé dans une caméra, obturateur rotatif qui est constitué par une pale d'obturateur (2) en forme de secteur de cercle ou de segment de cercle entraînée par un moteur d'obturateur via un arbre d'obturateur (20) et par une pale de réglage d'obturateur (3) agencée coaxialement par rapport à la pale d'obturateur et réglable par rapport à celle-ci au moyen d'un moteur de pale de réglage d'obturateur (33),
**caractérisé par**

- un capteur (7) couplé à la pale d'obturateur (2) pour détecter la position de la pale d'obturateur et pour fournir des signaux de position de la pale d'obturateur,
- un capteur (8) couplé à la pale de réglage d'obturateur (3) pour détecter la position de la pale de réglage d'obturateur et pour fournir des signaux de position de la pale de réglage d'obturateur,
- un compteur de position (10) alimenté par des signaux de position de la pale d'obturateur et des signaux de position de la pale de réglage d'obturateur pour former la différence entre les signaux de position de la pale d'obturateur et les signaux de position de la pale de réglage d'obturateur.

14. Dispositif selon la revendication 13, **caractérisé en ce que** les capteurs (7, 8) sont constitués par des instruments de mesure angulaire absolus avec plusieurs pistes de codage (701, 703 - 706) agencées sur un disque partiel (70b) et avec des dispositifs de balayage (716, 717) associés aux pistes de codage (701, 703 - 706).

15. Dispositif selon la revendication 14, **caractérisé en ce que** les instruments de mesure angulaire absolus sont constitués par des codeurs absolus, des résolveurs ou par des capteurs à induit rotatif.

16. Dispositif selon la revendication 13, **caractérisé en ce que** les capteurs (7, 8) sont constitués par des instruments de mesure angulaire incrémentiels avec une piste incrémentielle (701) périodique agencée sur un disque partiel (70a) et par une piste de trait de repère (702), qui présente au moins un trait de repère déterminant la position absolue du disque partiel (70a) et associant ladite position à une étape de mesure, et des dispositifs de balayage (714, 715) associés à la piste incrémentielle et à la piste à traits de repère (701, 702).

17. Dispositif selon la revendication 16, **caractérisé en ce que** la piste de traits de repère présente des traits de repère à codage de distance sur lesquels sont appliqués des traits de repère avec des distances différentes définies.

18. Dispositif selon l'une au moins des revendications 14 à 17, **caractérisé en ce que** les capteurs (7, 8) présentent des disques partiels (70c) avec pistes sinus et pistes cosinus (707, 708) additionnelles, et **en ce qu'**une unité de calcul montée en aval du dispositif de balayage détectant les signaux de capteurs des signaux sinus et des signaux cosinus est alimentée par les signaux sinus et les signaux cosinus et fournit des valeurs d'arctangente calculées à partir des signaux sinus et des signaux cosinus.

**19.** Dispositif selon l'une au moins des revendications précédentes, **caractérisé en ce que** les capteurs (7, 8) sont réalisés sous forme d'instruments de mesure angulaire absolus ou incrémentiels avec balayage photoélectrique, magnétorésistif ou à aimantation permanente.

**20.** Dispositif selon l'une au moins des revendications précédentes 13 à 19, pour détecter, régler et/ou réguler l'angle d'ouverture de diaphragme (secteur clair/obscur) de l'obturateur rotatif réglable agencé dans une caméra, **caractérisé par**

- une logique de commande (11) alimentée par la différence des signaux de position de pale d'obturateur et des signaux de position de pale de réglage d'obturateur et reliée à une interface (19) pour la commande de la caméra, et
- un dispositif de réglage de position (12) de pale de réglage d'obturateur qui est alimenté, côté entrée, par la différence des signaux de position de pale d'obturateur et des signaux de position de pale de réglage d'obturateur ainsi que par une valeur de consigne, fournie par la commande de la caméra via une interface (15) pour la pale de réglage d'obturateur (3) ou pour le secteur clair (secteur obscur) de l'obturateur rotatif (1) réglable et qui fournit, côté sortie, une valeur de réglage pour le moteur de pale de réglage d'obturateur (33).

**21.** Dispositif selon l'une au moins des revendications précédentes 13 à 20, **caractérisé par** un dispositif de palpage (9) de sécurité agencé dans la zone de rotation de l'obturateur rotatif (1) réglable pour détecter le secteur clair/obscur de l'obturateur rotatif (1) réglable, dont la sortie est reliée à la logique de commande (11) pour fournir des valeurs absolues du secteur clair/obscur de l'obturateur rotatif (1) réglable.

**22.** Dispositif selon l'une des revendications 20 ou 21, **caractérisé en ce que** la logique de commande (11) est reliée, côté entrée, à un dispositif de palpage (14) pour détecter le verrouillage mécanique de la pale de réglage d'obturateur (3) et qui bloque le pilotage du moteur de pale de réglage d'obturateur (33) lorsque le verrouillage mécanique de la pale de réglage d'obturateur (3) est activé.

**23.** Dispositif selon l'une au moins des revendications précédentes 13 à 22, **caractérisé en ce que** le dispositif de réglage de position (12) de pale de réglage d'obturateur est relié via un dispositif (13) de pilotage du moteur de pale de réglage d'obturateur (33) avec un dispositif de transmission d'énergie et de signaux (61, 62, 63 ; 64, 65, 68, 69) pour commander ou pour alimenter le moteur de pale de réglage d'obturateur (33).

**24.** Dispositif selon l'une au moins des revendications précédentes 13 à 23, **caractérisé en ce que** le dispositif de réglage de position (12) de pale de réglage d'obturateur est relié via le dispositif de transmission d'énergie (61, 62, 63) avec un amplificateur de moteur (66) ainsi que via le dispositif de transmission de signaux (64, 65, 68, 69) avec un processeur (60) pour commander et réguler le moteur de pale de réglage d'obturateur (33).

**25.** Dispositif selon la revendication 24, **caractérisé en ce que** l'entrée de commande de l'amplificateur de moteur (66) relié au dispositif de transmission d'énergie (61, 62, 63) est reliée à une première sortie du processeur (60), qui est branché par une première entrée à la sortie de l'amplificateur de mesure de valeur réelle (67) qui est relié à un capteur à potentiomètre (34) couplé au moteur de pale de réglage d'obturateur (33), et **en ce qu'**une deuxième entrée et une deuxième sortie du processeur (60) sont respectivement reliées au dispositif de transmission de signaux bidirectionnel (64, 65 ; 68, 69).

**26.** Dispositif selon l'une au moins des revendications précédentes 23 à 25, **caractérisé par** un dispositif de transmission d'énergie (61, 62, 63) sans contact et/ou par un dispositif de transmission de signaux (64, 65, 68, 69) sans contact.

**27.** Dispositif selon l'une au moins des revendications précédentes 23 à 26, **caractérisé en ce que** le dispositif de transmission d'énergie (61, 62, 63) est constitué par un transformateur (62) divisé fonctionnant à haute fréquence, dont l'enroulement primaire (621) est relié à un convertisseur continu-continu (61) côté primaire et dont l'enroulement secondaire (622) est relié à un convertisseur continu-continu (63) côté secondaire.

**28.** Dispositif selon l'une au moins des revendications précédentes 23 à 27, **caractérisé en ce que** le dispositif de transmission de signaux (64, 65, 68, 69) est constitué respectivement par un émetteur optique (64, 68) et par un récepteur optique (65, 69) pour permettre l'échange bidirectionnel de signaux entre le dispositif de réglage de position (12) de pale de réglage d'obturateur et le processeur (60).

**29.** Dispositif selon l'une au moins des revendications précédentes 23 à 27, **caractérisé en ce que** le dispositif de transmission de signaux est constitué par un dispositif de transmission de signaux inductif pour permettre l'échange bidirectionnel de signaux entre le dispositif de réglage de position (12) de pale de réglage d'obturateur et le processeur (60).

**30.** Dispositif selon l'une au moins des revendications précédentes 23 à 27, **caractérisé en ce que** le dispositif de transmission de signaux est constitué par un dispositif de transmission de signaux à fréquence porteuse pour permettre l'échange bidirectionnel de signaux entre le dispositif de réglage de position (12) de pale de réglage d'obturateur et le processeur (60), dans lequel les signaux sont modulés avec une fréquence porteuse sur l'alimentation en énergie du moteur de pale de réglage d'obturateur (33).

**31.** Dispositif selon l'une au moins des revendications précédentes 13 à 24, **caractérisé en ce que** le dispositif de réglage de position (12) de pale de réglage d'obturateur pilote le moteur de pale de réglage d'obturateur (33) via un étage de sortie de moteur (13) et un passage tournant ou via une bague collectrice (6).

**32.** Dispositif selon l'une au moins des revendications précédentes 13 à 30, **caractérisé en ce que** les capteurs (7, 8) sont couplés à l'arbre d'obturateur (20) et à l'arbre de pale de réglage d'obturateur (30) pour palper la position de la pale d'obturateur et la position de la pale de réglage d'obturateur, respectivement.

**33.** Dispositif selon l'une au moins des revendications précédentes 13 à 31, **caractérisé en ce que** l'arbre d'obturateur (20) est relié à un entraînement d'obturateur via une transmission (21).

**34.** Dispositif selon l'une au moins des revendications précédentes 13 à 32, **caractérisé en ce que** la pale de réglage d'obturateur (3) est reliée au moteur de pale de réglage d'obturateur (33) via un arbre de pale de réglage d'obturateur (30) et une transmission (31, 32) guidée à travers l'arbre d'obturateur (20).

# Fig. 1

# Fig. 2

Fig. 3

Fig. 4

# Fig. 5

# Fig. 6